(19) Europäisches Patentamt
European Patent Office
Office européen des brevets

(11) Numéro de publication : 0 406 057 B1

(12) # FASCICULE DE BREVET EUROPEEN

(45) Date de publication du fascicule du brevet : **18.11.93 Bulletin 93/46**

(51) Int. Cl.$^5$ : **C08F 2/46,** C08F 220/28, C09D 133/14, C07D 317/36

(21) Numéro de dépôt : **90401698.7**

(22) Date de dépôt : **18.06.90**

(54) **Procédé de fabrication de revêtements par radioréticulation, nouvelles compositions radioréticulables et nouveaux carbonates.**

(30) Priorité : **29.06.89 FR 8908651**

(43) Date de publication de la demande : **02.01.91 Bulletin 91/01**

(45) Mention de la délivrance du brevet : **18.11.93 Bulletin 93/46**

(84) Etats contractants désignés : **BE DE FR GB IT NL**

(56) Documents cités :
**EP-A- 0 001 088**
**EP-A- 0 018 259**
**EP-A- 0 056 526**

(73) Titulaire : **SOCIETE NATIONALE DES POUDRES ET EXPLOSIFS**
**12, quai Henri IV**
**F-75181 Paris Cédex 04 (FR)**

(72) Inventeur : **Brosse, Jean-Claude**
**Duneau**
**F-72160 Connerre (FR)**
Inventeur : **Chevalier, Sammy**
**143 Boulevard Lefebvre**
**F-75015 Paris (FR)**
Inventeur : **Couvret, Denis**
**5 rue Braban**
**F-91150 Etampes (FR)**
Inventeur : **Decker, Christian**
**3 rue de l'Abattoir**
**F-68170 Rixheim (FR)**
Inventeur : **Moussa, Khalil**
**2212 A W 4th St.**
**Hattiesburg, Mississppi 39406 (US)**

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

EP 0 406 057 B1

Jouve, 18, rue Saint-Denis, 75001 PARIS

## Description

L'invention a pour objet un procédé de fabrication de revêtements par radioréticulation de compositions liquides à la température ambiante (20°C environ) contenant au moins un composé (méth)acrylique, monomère ou oligomère, et un système diluant réactif contenant au moins un composé mono(méth)acrylique. Ces compositions peuvent radioréticuler à l'aide de moyens appropriés de radioréticulation, notamment de photoréticulation, par polymérisation des doubles liaisons (méth)acryliques, ce qui entraîne un durcissement de la composition et l'obtention de revêtements.

L'invention a également pour objet de nouvelles compositions radioréticulables ainsi que de nouveaux carbonates (méth)acryliques qui peuvent notamment être utilisés pour mettre en oeuvre le procédé précité selon l'invention.

On entend par composé "(méth)acrylique" un composé présentant au moins un groupement

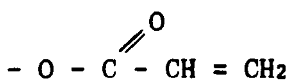 ou 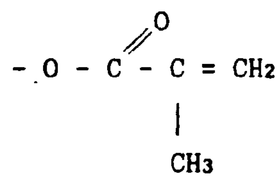

On entend par "revêtement" un film polymérisé, cohésif, non maculant,revêtant un support tel que le bois, le papier, un métal, une matière plastique ou minérale, et adhérant à ce support.

Les compositions liquides à la température ambiante utilisées pour obtenir des revêtements associent au moins un composé (méth)acrylique, monomère ou oligomère, à un système diluant réactif qui permet dans un premier temps de réduire la viscosité de la composition lorsque le composé (méth)acrylique monomère ou oligomère, ou un mélange de tels composés, est trop visqueux pour être correctement appliqué en film sur le support. Dans un second temps, le système diluant réactif participe à la polymérisation du composé (méth)acrylique par copolymérisation, ce qui permet d'obtenir les propriétés mécaniques désirées.

Ce système diluant réactif, miscible avec le (ou les) composé (méth)acrylique monomère ou oligomère, contient au moins un diluant comportant un ou plusieurs groupements (méth)acryliques, ce qui rend possible cette copolymérisation.

De très nombreux systèmes diluants réactifs ont déjà été décrits dans la littérature. Les diluants réactifs peuvent être classés en deux groupes : les monomères vinyliques et les monomères acryliques.

L'intérêt des monomères vinyliques comme la N-vinyl pyrrolidone est qu'ils permettent d'obtenir des mélanges très réactifs. Cependant ils sont volatils et très souvent toxiques. De plus, avec la N-vinyl pyrrolidone qui est le monomère vinylique le plus utilisé, on obtient des revêtements assez hygroscopiques, ce qui modifie leurs propriétés mécaniques.

Les monomères acryliques ne présentent pas cet inconvénient mais ils conduisent à des mélanges moins réactifs qu'avec la N-vinyl pyrrolidone.

L'homme de métier est donc à la recherche de monomères acryliques utilisables comme diluant réactif et qui soient aussi réactifs que la N-vinyl pyrrolidone, ou, pour le moins, qui soient plus réactifs que les diluants acryliques jusqu'alors utilisés dans les procédés de fabrication de revêtements par radioréticulation.

En ce qui concerne les diluants acryliques, l'homme de métier sait que l'utilisation d'acrylates polyfonctionnels, tels que le diacrylate d'hexanediol (HDDA) ou le triacrylate du triméthylol propane (TMPTA), permet d'augmenter la réactivité comparativement à l'utilisation d'acrylates monofonctionnels tels que le phénoxyéthylacrylate (PEA), l'acrylate de bêtahydroxyéthyloxazolidone et l'acrylate de bêtahydroxyéthylcarbamate d'isopropyle. Toutefois, l'utilisation d'acrylates polyfonctionnels, comparativement à l'utilisation d'acrylates monofonctionnels, entraîne un taux en insaturations résiduelles nettement plus élevé après radioréticulation, ce qui a comme conséquence une moins bonne tenue du revêtement à la lumière en vieillissement, c'est-à-dire qu'il jaunit rapidement avec pertes éventuelles de propriétés mécaniques.

L'homme de métier est donc à la recherche de diluants acrylates monofonctionnels qui assurent un bon vieillissement des revêtements, qui assurent de bonnes propriétés d'usage telles que souplesse, adhésion, résistance à l'abrasion, et qui soient aussi réactifs que les acrylates polyfonctionnels, pour des raisons évidentes de coût et de rentabilité.

EP 56 526 décrit des compositions radioréticulables pouvant contenir un carbonate monoacrylique associé à un acrylate polyfonctionnel. Ces carbonates et les compositions correspondantes sont très nettement moins réactifs que ceux selon notre invention.

Il en est de même pour les carbonates monoacryliques décrits dans EP 1 088.

Par ailleurs FR 2 453 859 décrit l'utilisation du méthacryloyloxy-2 éthyl carbonate de carbonyldioxy-2,3 propyle comme agent d'extraction de valeurs métalliques à partir de solutions aqueuses.

Le problème précité ne trouve donc pas de solution dans les procédés et compositions jusqu'alors utilisés.

Ce problème est résolu de façon inattendue par le procédé selon la présente invention, ainsi que par les nouvelles compositions radioréticulables et les nouveaux carbonates mono(méth)acryliques qu'il met en oeuvre.

Il s'agit d'un procédé ultra-rapide de fabrication de revêtements par radioréticulation, mis en oeuvre à l'échelle de quelques millisecondes et utilisant pourtant un diluant réactif mono(méth)acrylique.

Comme cela est bien connu d'une façon générale, les vitesses sont inférieures pour les dérivés méthacryliques comparativement aux dérivés acryliques correspondants. En ce qui concerne l'aspect cinétique, seule la comparaison entre acrylates ou entre méthacrylates n'a de signification.

La présente invention a donc pour objet un procédé de fabrication de revêtements par radioréticulation caractérisé en ce qu'on procède selon les étapes successives suivantes :

**a)** On réalise une composition radioréticulable (C) par mélange d'au moins un composé (méth)acrylique (A) avec un système diluant réactif comprenant au moins un carbonate mono(méth)acrylique (B) répondant à la formule générale (I) :

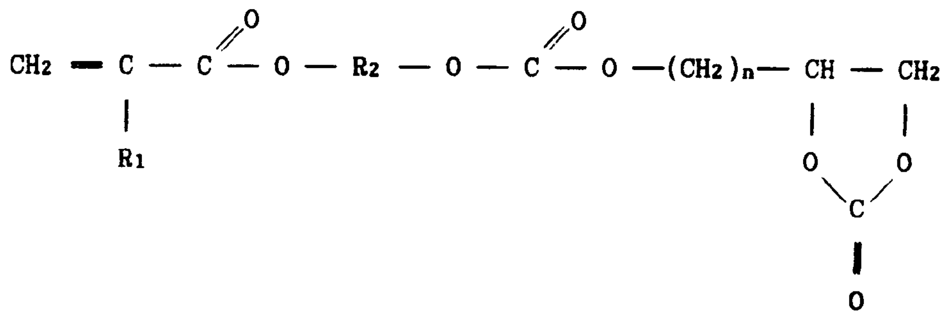

dans laquelle :

. $R_1$ représente l'hydrogène ou le groupement méthyle,

. $R_2$ représente une chaîne alkylène éther ou alkylène, éventuellement substituée par au moins un groupement méthyle ou éthyle, ayant un nombre total d'atomes de carbone compris entre 2 et 6, de préférence une chaîne alkylène de formule $(CH_2)_m$, m étant un nombre entier tel que $2 \leqq m \leqq 6$, de préférence 2,

. **n** représente un nombre entier tel que $1 \leqq n \leqq 6$, de préférence 1, 2 ou 4

**b)** On applique la composition radioréticulable (C) sur un support.

**c)** On radioréticule la composition (C) ainsi appliquée.

Comme exemple de chaîne alkylène éther ou alkylène pour $-R_2-$, on peut citer les chaînes suivantes :

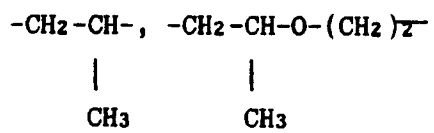

et

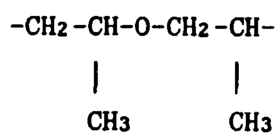

De façon particulièrement préférée, le carbonate mono(méth)acrylique (B) de formule générale (I) est choisi dans le groupe constitué par l'acryloyloxy-2 éthyl carbonate de carbonyldioxy-2,3 propyle (B1), l'acryloyloxy-2 éthyl carbonate de carbonyldioxy-3,4 butyle (B2) et l'acryloyloxy-2 éthyl carbonate de carbonyldioxy-5,6 hexyle (B3)

$B_1$ : 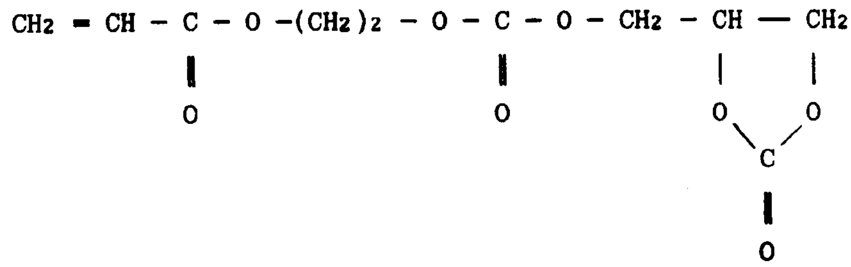

$B_2$ : 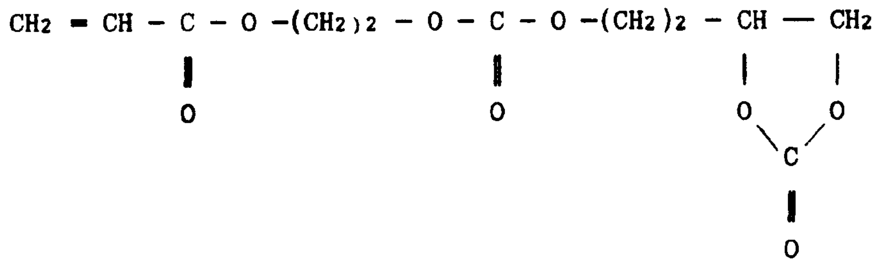

$B_3$ : 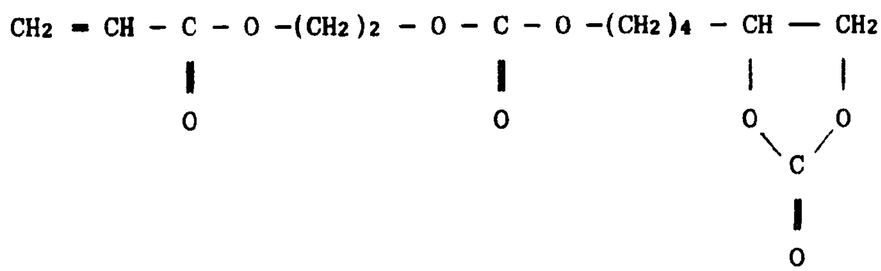

Comparativement aux procédés connus mettant en oeuvre un système diluant réactif monoacrylique, le procédé selon notre invention, tout en assurant un niveau équivalent de résistance à la lumière et de propriétés d'usage du revêtement, permet des vitesses de radioréticulation très nettement supérieures, de l'ordre de quelques millisecondes, ce qui entraîne un gain très appréciable du temps d'exposition aux radiations pour obtenir la radioréticulation.

Cette réactivité très élevée vis-à-vis des radiations des composés de formule générale (I) selon notre invention et des compositions radioréticulables correspondantes permet par exemple, lorsqu'on utilise la photoréticulation en présence d'un amorceur, de diminuer la quantité d'amorceur tout en maintenant des durées d'expositions très brèves. Ce gain en amorceur est très appréciable dans le cas d'utilisation de systèmes tels que benzophénone/amine tertiaire ou thioxanthone/amine tertiaire, car il permet de réduire considérablement le taux d'amine nécessaire. Or il est bien connu que la présence d'une amine, outre le fait que son odeur est désagréable, entraîne un jaunissement et une diminution importante de la dureté du revêtement.

De plus cette réactivité est tellement élevée que la Demanderesse a découvert, que de façon particulièrement surprenante, on pouvait obtenir des revêtements ayant de bonnes propriétés mécaniques par exposition durant seulement 1s environ au rayonnement UV des composés de formule générale (I) selon notre invention et des compositions correspondantes, sans qu'il soit nécessaire que ces composés et compositions contiennent un amorceur de photoréticulation. Un tel résultat n'a jamais pu être obtenu, à notre connaissance, avec les composés monoacryliques et les compositions correspondantes utilisées dans le domaine de la photoréticulation.

Un intérêt supplémentaire et très important des compositions photoréticulables à faible taux en amorceur, ou ne contenant pas d' amorceur, réside dans le fait qu'ils sont beaucoup plus transparents aux UV, ce qui permet de polymériser en profondeur, jusqu'à 1cm d'épaisseur.

Les carbonates mono(méth)acryliques (B) répondant à la formule générale (I) peuvent être obtenus par réaction du chloroformiate de structure

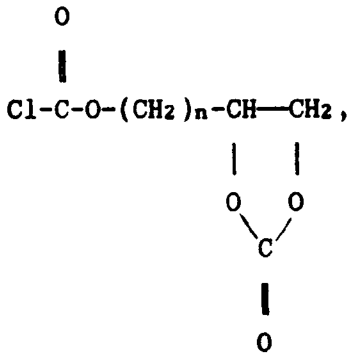

**n**, ayant la signification précitée, sur le méthacrylate hydroxylé de formule

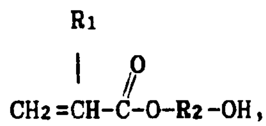

$R_1$ et $R_2$ ayant la signification précitée, en présence d'une amine tertiaire, pyridine par exemple, comme capteur de l'acide chlorhydrique formé, en milieu solvant organique, dichlorométhane par exemple. Ils sont ensuite isolés et identifiés selon des procédés connus. Une telle méthode générale est décrite notamment dans l'exemple 7 de FR 2 453 859 précité.

Le chloroformiate précité peut lui-même être obtenu par phosgénation complète du triol correspondant $HO-(CH_2)_n-CHOH-CH_2OH$, selon un procédé bien connu, décrit par exemple dans US 2 446 145. Comme exemple de triol, on peut citer le glycérol (n = 1), le 1,2,4-butanetriol (n = 2) et le 1,2,6-hexane triol (n = 4).

Les proportions des constituants de la composition radioréticulable (C) peuvent varier en fonction des propriétés mécaniques recherchées pour le revêtement.

De façon préférée, le composé (méth)acrylique (A) représente 25 à 60% en poids de la composition (C) et le système diluant réactif représente 75 à 40% en poids de la composition (C).

De façon particulièrement préférée, la composition (C) n'est constituée que par le composé (A) et le système diluant réactif, avec éventuellement en outre une faible quantité, de l'ordre de quelques % en poids, d'un amorceur de photoréticulation et/ou des additifs habituellement utilisés dans les compositions radioréticulables.

Selon une variante préférée de l'invention, on utilise un système diluant réactif uniquement constitué par le carbonate (B) de formule générale (I).

Selon une autre variante de l'invention, le composé méthacrylique (A) est identique au carbonate mono(méth)acrylique (B) de formule générale (I). Dans ce cas, la composition radioréticulable (C) est de préférence uniquement constituée du dit composé carbonate mono(méth)acrylique (B), en présence éventuellement d'une faible quantité, de l'ordre de quelques % en poids, d'un amorceur de photoréticulation, et/ou des additifs habituellement utilisés dans les compositions radioréticulables.

Selon d'autres variantes le système diluant réactif peut être constitué par un mélange de plusieurs carbonates (B) répondant à la formule générale (I) ou par le mélange d'un carbonate (B) avec un autre diluant réactif, acrylique ou vinylique par exemple, et/ou avec un diluant non réactif.

Le composé (méth)acrylique (A) est de préférence un oligomère liquide poly(méth)acrylique à terminaisons (méth)acryliques, dont la masse moléculaire moyenne en nombre est comprise entre 500 et 5 000, de préférence choisi dans le groupe constitué par les oligomères polyester-(méth)acryliques, les oligomères époxy-(méth)acryliques, les oligomères polycarbonate-(méth)acryliques, les oligomères polyéthers-(méth)acryliques et les oligomères polyuréthannes (méth)acryliques.

Les oligomères polyuréthannes-(méth)acryliques peuvent par exemple être obtenus par réaction d'un polyol et d'un polyisocyanate suivie de la réaction du produit obtenu avec un ester (méth)acrylique ayant un hydrogène actif.

A titre d'exemple d'ester (méth)acrylique ayant un hydrogène actif, on peut citer les hydroxyalkyl-(méth)acrylates, notamment l'hydroxy-2 éthyl (méth)acrylate et l'hydroxy-2 propyl(méth)acrylate.

Parmi les polyisocyanates convenables, on peut citer, à titre indicatif, les composés suivants : les 2,4 et 2,6-diisocyanatotoluène, les 2,4 et 2,6 diisocyanato-méthyl-1 cyclohexane, le 4,4'-diisocyanato-dicyclohexyl

méthane, le diisocyanato-isophorone, le diisocyanate d'hexaméthylène, le diisocyanato-2,2,4-triméthylhexaméthylène, les biurets à base, par exemple, de diisocyanate d'hexaméthylène, ainsi que leurs mélanges.

Parmi les polyols qui conviennent on peut citer :

- les polyépichlorhydrines hydroxylées,
- les polybutadiènes hydroxylés,
- les polycarbonates hydroxytéléchéliques obtenus par phosgénation ou transestérification de diols ou triols aliphatiques, cycloaliphatiques ou aromatiques seuls ou en mélange,
- les polycaprolactones,
- les polyesters hydroxytéléchéliques obtenus par réaction d'un polyol (tel qu'éthylèneglycol, diéthylèneglycol, glycérol, butane diol-1,3, bisphénol A propoxylé, sorbitol) sur un acide polycarboxylique ou son anhydride ou son ester (tel que l'acide adipique, l'anhydride maléique, succinique ou téréphtalique),
- les polyétherpolyols obtenus par addition d'un oxyde d'alkylène (tel que l'oxyde d'éthylène, l'oxyde de propylène, le tétrahydrofuranne) sur un polyol tel qu'indiqué précédemment,
- les polyéthers esters tels que l'adipate de polydiéthylèneglycol et l'adipate de polytriéthylèneglycol dans lesquels le polyéther remplace une partie du glycol,
- les polyuréthannes hydroxytéléchéliques formés à partir de polyols tels que précités et de polyisocyanates tels que ceux précités.

De façon particulièrement préférée, les oligomères polyuréthannes-(méth)acryliques sont des oligomères polyuréthannes, linéaires di(méth)acryliques.

Comme cela a déjà été mentionné, le composé (méth)acrylique (A) peut être, selon une variante de l'invention, identique au carbonate mono(méth)acrylique (B) de formule générale (I).

Le composé (méth)acrylique (A) peut également être un monomère mono ou poly(méth)acrylique habituellement utilisé dans les compositions radioréticulables, comme par exemple le diacrylate obtenu par réaction de l'acide acrylique sur le diglycidyle éther du bisphénol A (DGEBA).

Pour mettre en oeuvre le procédé selon l'invention, on radioréticule la composition (C) après avoir appliqué celle-ci sur le support à revêtir sous forme d'un film de faible épaisseur, selon un moyen connu en soi. De préférence l'épaisseur est inférieure à 0,2 mm.

Comme rayonnement on peut employer, par exemple, un rayonnement électromagnétique, un bombardement électronique ou un rayonnement nucléaire.

De façon préférée, on utilise un rayonnement UV, en présence d'un photo-amorceur.

A titre d'exemples, on peut citer comme photo-amorceur les éthers de la benzoïne et les dérivés phénoniques tels que benzophénone ou diéthoxyacétophénone, seuls (par exemple le photo-amorceur commercialisé par la Société CIBA sous la marque déposée "IRGACURE 651" ou le photo-amorceur commercialisé par la Société MERCK sous la marque déposée "DAROCUR 1116") ou en association avec une amine tertiaire, par exemple la méthyldiéthanolamine.

Selon une autre variante, on utilise un rayonnement UV en l'absence d'un photo-amorceur. Cette façon d'opérer, et les avantages que cela procure, ont déjà été mentionnés précédemment.

Un mode préféré de réalisation de l'invention consiste à faire passer le support revêtu de la composition sous une lampe UV, à vitesse désirée.

La composition (C) utilisée pour mettre en oeuvre le procédé selon l'invention peut contenir tous les additifs habituellement utilisés dans les compositions radioréticulables pour revêtements, notamment des agents pour ajuster le brillant de surface du revêtement, des tensioactifs, des charges ou des colorants.

La présente invention a également pour objet, d'une part les compositions radioréticulables (C) précitées qui sont nouvelles lorsque le composé (A) et le carbonate (B) ne sont pas simultanément le méthacryloyloxy-2 éthyl carbonate de carbonyldioxy-2,3 propyle, et d'autre part les nouveaux carbonates (B) précités de formule (I) dans laquelle $R_2$ représente $(CH_2)_m$ et dans laquelle m et **n** sont des entiers, identiques ou différents, tels que :

$2 \leqq m \leqq 6$

$1 \leqq n \leqq 6$

$n \neq 1$ lorsque m = 2 et $R_1$ représente le groupement méthyle.

Les exemples suivants illustrent l'invention.

Exemple 1 Synthèse de l'acryloyloxy-2 éthyl carbonate de carbonyldioxy-2,3 propyle (B1)

Dans un réacteur à double enveloppe équipé d'un cryostat, d'une sonde thermométrique et d'une ampoule de coulée, on introduit 116g (1 mol) d'hydroxyéthylacrylate, 180,45g (1 mol) de chloroformiate de carbonyldioxy-2,3 propyle obtenu par phosgénation du glycérol selon le procédé décrit dans US 2 446 145 et 1 l de dichlorométhane sec. On purge le montage à l'argon puis on refroidit le mélange à 0°C, sous agitation.

On ajoute ensuite au mélange, goutte à goutte grâce à l'ampoule de coulée, 79g (1 mol) de pyridine. Cette façon d'opérer permet de maintenir une température inférieure à 5°C. Lorsque l'addition est terminée, on laisse revenir le milieu réactionnel à la température ambiante, 20°C environ.

On filtre alors le mélange réactionnel pour éliminer le chlorhydrate de pyridinium formé.

On lave le filtrat avec une solution aqueuse d'acide chlorhydrique 0,2 N puis à l'eau distillée jusqu'à neutralité.

Après séchage sur sulfate de magnésium et évaporation du solvant, on obtient 242g (rendement 93%) du composé B1, identifié par ses spectres IR, RMN et de masse. Sa pureté est de l'ordre de 97% déterminée selon les techniques chromatographiques usuelles.

Exemple 2 Synthèse de l'acryloyloxy-2 éthyl carbonate de carbonyldioxy-3,4 butyle (B2)

On reproduit le mode opératoire précédent de l'exemple 1 en remplaçant le chloroformiate de carbonyldioxy-2,3 propyle par 194,45g (1 mol) de chloroformiate de carbonyldioxy-3,4 butyle obtenu par phosgénation du butanetriol-1,2,4 selon le procédé décrit dans US 2 446 145 en remplacant le glycérol par le butanetriol-1,2,4.

On obtient 222g (rendement 81%) du composé B2, identifié par ses spectres IR, RMN et de masse. Sa pureté est de l'ordre de 96%.

Exemple 3 Synthèse de l'acryloyloxy-2 éthyl carbonate de carbonyldioxy-5,6 hexyle (B3)

On reproduit le mode opératoire précédent de l'exemple 1 en remplaçant le chloroformiate de carbonyldioxy-2,3 propyle par 222,45 g (1 mol) de chloroformiate de carbonyldioxy-5,6 hexyle obtenu par phosgénation de l'hexanetriol-1,2,6 selon le procédé décrit dans US 2 446 145 en remplaçant le glycérol par l'hexanetriol-1,2,6. On obtient 201g (rendement 90,5%) du composé B3, identifié par ses spectres IR, RMN et de masse. Sa pureté est de l'ordre de 97%.

Exemple 4 Synthèse du méthacryloyloxy-2 éthyl carbonate de carbonyldioxy-2,3 propyle (B4)

On reproduit le mode opératoire précédent de l'exemple 1 en remplaçant l'hydroxyéthylacrylate par 130g (1 mol) d'hydroxyéthylméthacrylate.

On obtient 215g (rendement 78,5%) du composé B4, identifié par ses spectres IR, RMN et de masse. Sa pureté est de l'ordre de 97%.

Exemples 5 à 14 Réalisation de revêtements par photoréticulation de compositions (C) uniquement constituées d'un monomère carbonate (B) de formule générale (I) en présence d'un photo-amorceur. Comparaison avec des revêtements obtenus selon des procédés connus à partir de monomères.

Le photo-amorceur utilisé dans tous ces exemples y compris les exemples comparatifs est le composé de formule :

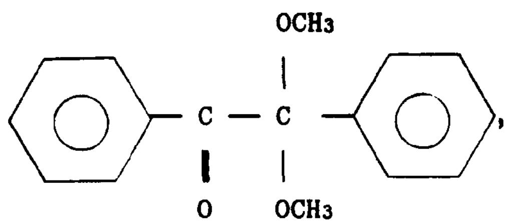

commercialisé par la société CIBA sous la marque déposée IRGACURE 651.

On réalise les diverses compositions par mélange de 100 parties en poids de monomère avec 5 parties en poids du photo-amorceur.

On applique ensuite chaque composition sur une plaque de chlorure de sodium à l'aide d'une réglette calibrée pour former un film uniforme de 24µm d'épaisseur.

On irradie ensuite la composition ainsi appliquée par une source UV matérialisée par une lampe à vapeur de mercure moyenne pression d'une puissance de 700 W dont le rayonnement est concentré à l'aide d'un réflecteur semi-elliptique. L'échantillon est exposé à une irradiance de 14,6 $10^{-2}W.cm^{-2}$.

Les mesures d'irradiance sont réalisées à l'aide d'un radiomètre UV équipé d'une cellule dont la fenêtre

spectrale va de 250 à 400 nm.

La cinétique de la photopolymérisation des compositions a été suivie par spectrométrie infra-rouge en exposant l'échantillon au rayonnement UV pendant une durée bien définie qui va de 1/300$^{e}$ de seconde à 1s grâce à l'emploi d'un obturateur photo, à l'air et à température ambiante.

Pour un temps d'irradiation donné, on détermine l'avancement de la polymérisation à partir de la décroissance des bandes d'absorption caractéristiques de la fonction (méth)acrylate selon une méthode connue, décrite par exemple par G.L. COLLINS, D.A. YOUNG et J.R. COSTANZA, Celanese Research Company, Journal of Coating Technology, Vol 48, n° 618, juillet 1976.

Cette méthode permet également d'accéder au taux d'insaturations résiduelles après irradiation.

La dureté Persoz des revêtements obtenus après 1s d'irradiation est déterminée selon la norme française NF T 30016.

Les exemples 5 à 7 correspondent au procédé selon la présente invention mis en oeuvre respectivement avec les monomères B1, B2 et B3 obtenus selon les exemples 1 à 3.

Les exemples 8 à 14 sont des exemples comparatifs, mis en oeuvre selon des procédés connus, permettant de mettre en évidence les avantages du procédé selon notre invention.

L'exemple 8 a été mis en oeuvre avec le monomère M1 de formule

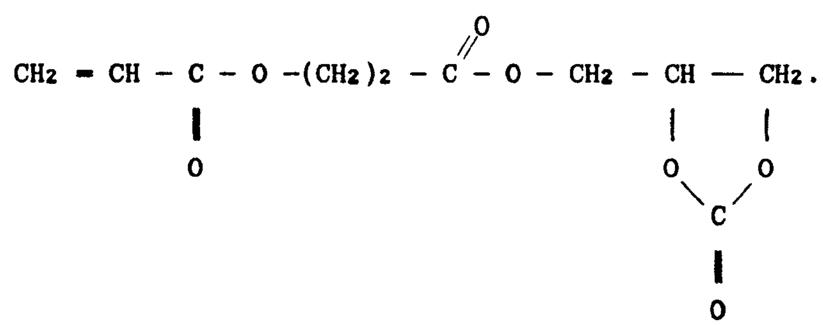

Ce monomère ne se distingue du monomère B1 selon l'invention que par la suppression d'un oxygène, c'est-à-dire qu'une fonction ester remplace la fonction carbonate linéaire de B1.

L'exemple 9 a été mis en oeuvre avec le monomère M2 de formule

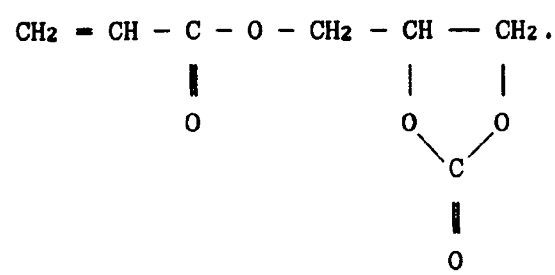

Cet exemple correspond à l'état de la technique décrit par EP 1 088 précité.

L'exemple 10 a été mis en oeuvre avec le monomère M3 de formule

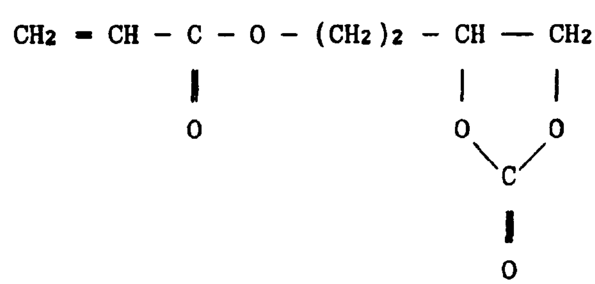

L'exemple 11 a été mis en oeuvre avec la monomère M4 de formule

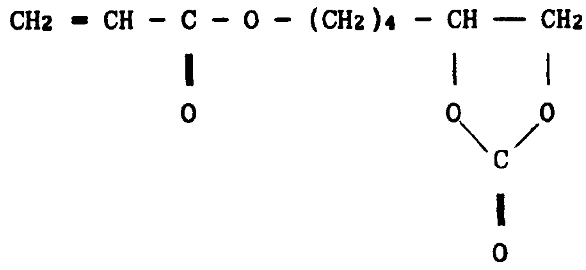

L'exemple 12 a été mis en oeuvre avec le monomère M5 de formule

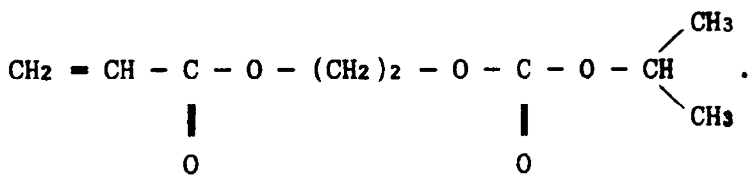

Cet exemple correspond à l'état de la technique décrit par EP 56 526 précité.

L'exemple 13 a été mis en oeuvre avec le tripropylèneglycoldiacrylate (TPGDA) de formule

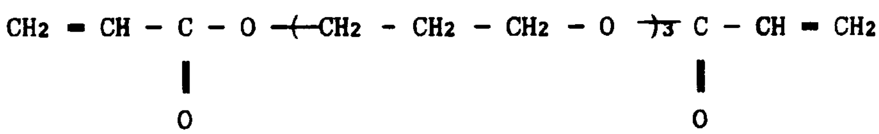

L'exemple 14 a été mis en oeuvre avec l'éthyldiéthylèneglycolacrylate (EDGA) de formule

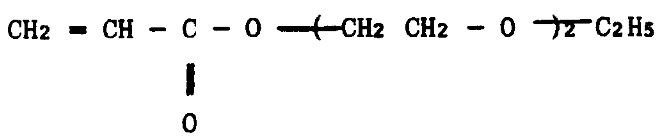

La figure 1 regroupe les courbes obtenues pour chaque exemple représentant le taux de conversion des fonctions acryliques présentes au départ (taux d'avancement de la polymérisation) en fonction du temps d'irradiation, chaque monomère utilisé étant repéré par son code précité.

En ce qui concerne l'exemple 14, la composition reste pâteuse et maculante après 1s d'exposition. On n'obtient donc pas de revêtement et la courbe correspondante n'est pas représentée.

Pour tous les autres exemples, les revêtements adhérent au support et sont secs au toucher, c'est-à-dire qu'ils ne sont pas maculants et qu'ils ne présentent pas d'adhérence au doigt, lorsque le taux de conversion atteint 60 à 80%, soit au moins 10 fois plus rapidement selon la présente invention que selon les procédés connus.

Le tableau 1 suivant précise, pour chaque exemple, la concentration initiale ($[A]_0$) en fonctions acryliques, la vitesse de photopolymérisation (Rp), la photosensibilité (S), c'est-à-dire l'énergie nécessaire pour photopolymériser la moitié des fonctions acryliques, le taux d'insaturations résiduelles ($[A]_{résid}$) après 1s d'irradiation, ainsi que la dureté Persoz du revêtement obtenu après 1s d'irradiation. Le code (/) signifie mesure non effectuée.

| EX N° | Monomère | $[A]_0$ ($eq.kg^{-1}$) | Rp ($eq.kg^{-1}.s^{-1}$) | S ($mJ.cm^{-2}$) | $[A]_{résid}$ (%) | Dureté Persoz (s) |
|---|---|---|---|---|---|---|
| 5 | B1 | 3,65 | 385 | 0,9 | 2 | 200 |
| 6 | B2 | 3,46 | 167 | 1,5 | 2 | / |
| 7 | B3 | 3,15 | 65 | 3 | 4 | 18 |
| 8 | M1 | 3,90 | 31 | 20 | 7 | / |
| 9 | M2 | 5,54 | 35 | 22 | 11 | 340 |
| 10 | M3 | 5,11 | 11 | 50 | 6 | / |
| 11 | M4 | 4,44 | 11 | 50 | 6 | 14 |
| 12 | M5 | 4,70 | 2,5 | / | 87 | / |
| 13 | TPGDA | 6,33 | 16 | 44 | 33 | / |
| 14 | EGDA | 5,05 | Pas de revêtement. Produit restant pateux et maculant | | | |

Tableau 1

Ces résultats mettent en évidence la réactivité et la photosensibilité exceptionnelles et surprenantes des monomères B1, B2 et B3 selon notre invention. Le taux de conversion est supérieur à 80% après 0,02s d'irradiation, alors que ce taux n'est que de 1 à 2% avec les monomères monoacryliques jusqu'alors utilisés. Cette reactivité et cette photosensibilité sont même très nettement supérieurs à celles d'un diacrylate très utilisé, le TPGDA.

Après 2,5ms d'exposition, la composition à base du monomère B1 selon l'invention présente déjà 80% d'insoluble, ce qui est tout à fait exceptionnel.

Les exemples comparatifs 8 à 14 montrent également que tous les éléments de la structure des carbonates (B) de formule générale (I) selon l'invention sont nécessaires et contribuent à un effet de synergie. L'absence d'un seul de ces éléments (fonction carbonate linéaire, fonction carbonate cyclique, etc) suffit pour faire perdre au produit les propriétés exceptionnelles précitées.

On peut constater que ces propriétés ne sont pas obtenues au détriment de la dureté du revêtement obtenu, et que la teneur en insaturations résiduelles est faible, ce qui est intéressant pour les raisons que nous avons déjà mentionnées.

Exemples 15 et 16 Réalisation d'un revêtement par photoréticulation d'une composition (C) uniquement constituée d'un monomère monométhacrylique carbonate (B) de formule générale (I) en présence d'un photo-amorceur. Comparaison avec un revêtement obtenu selon un procédé connu, à partir d'un monomère monométhacrylique

Les conditions opératoires sont identiques à celles relatives aux exemples 5 à 14.

L'exemple 15 correspond au procédé selon la présente invention mis en oeuvre avec le monomère B4 obtenu selon l'exemple 4.

L'exemple 16 est un exemple comparatif mis en oeuvre selon un procédé connu avec le monomère M6 de formule

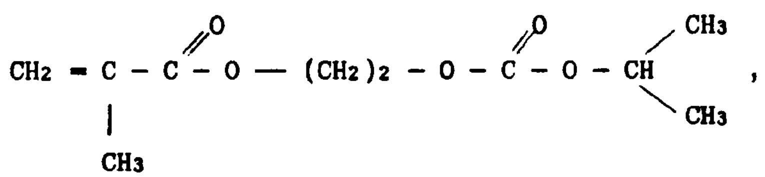

ce qui correspond à l'état de la technique décrit par EP 56 626 précité.

La figure 2 regroupe les courbes obtenues représentant pour chaque exemple le taux de conversion des fonctions méthacryliques présentes au départ (taux d'avancement de la polymérisation) en fonction du temps d'irradiation, chaque monomère utilisé étant repéré par son code précité.

Le tableau 2 suivant précise, pour chaque exemple, la concentration initiale ($[A]_0$) en fonctions méthacryliques, la vitesse de photopolymérisation (Rp), la photosensibilité (S) et le taux d'insaturations résiduelles ($[A]_{résid}$) après 1s d'irradiation.

| EX N° | Monomère | $[A]_0$ ($eq.kg^{-1}$) | Rp ($eq.kg^{-1}.s^{-1}$) | S ($mJ.cm^{-2}$) | $[A]_{résid}$ (%) |
|---|---|---|---|---|---|
| 15 | B4 | 3,46 | 19 | 13 | 10 |
| 16 | M6 | 4,4 | 0,7 | >100 | 90 |

Tableau 2

Dans l'exemple 16, S ne peut être mesuré puisque le taux de conversion de 50% n'a pas été atteint. D'après la figure 2, on peut toutefois déduire que S est nettement supérieur à 100.

Ces résultats mettent en évidence la réactivité et la photosensibilité exceptionnelles et surprenantes du monomère B4 selon notre invention. Un taux de conversion de 80% est atteint après 0,2s, alors que ce taux n'est que de 4% environ avec le monomère monométhacrylique M6 utilisé dans l'état de la technique.

En comparant l'exemple 15 selon l'invention avec les exemples comparatifs 8 à 14, on constate que le monomère monométhacrylique B4 utilisé selon l'invention est même plus réactif et photosensible que les monomères monoacryliques jusqu'alors utilisés, ce qui est inattendu.

Exemple 17 à 26 Réalisation de revêtements par photoréticulation de compositions (C) obtenues par mélange d'un oligomère polyuréthanne linéaire diacrylique avec un carbonate (B) de formule générale (I) utilisé comme diluant réactif, en présence d'un photo-amorceur. Comparaison avec des revêtements obtenus dans les mêmes conditions avec les diluants réactifs jusqu'alors utilisés.

Le photo-amorceur utilisé dans tous ces exemples, y compris les exemples comparatifs, est le même que celui utilisé pour les exemples 5 à 16. (IRGACURE 651).

L'oligomère polyuréthanne linéaire diacrylique utilisé dans tous ces exemples est la résine polyuréthanne linéaire diacrylique commercialisée par la SNPE sous la marque déposée "ACTILANE 20",de masse moléculaire moyenne 1 300, obtenue à partir de :

- 2n moles d'acrylate de 2-hydroxy éthyle,
- 2n moles d'isophorone diisocyanate (IPDI)
- n moles de polyadipate d'éthylène glycol

On réalise les diverses compositions par mélange de 50 parties en poids du polyuréthanne diacrylique, 50 parties en poids de diluant réactif et 5 parties en poids de photo-amorceur.

On opère ensuite comme pour les exemples 5 à 16 pour appliquer les compositions sur le support, radioréticuler les compositions ainsi appliquées, étudier la cinétique de photopolymérisation et mesurer la dureté Persoz des revêtements obtenus.

La dureté Persoz est mesurée d'une part après 0,2s d'irradiation et d'autre part après 1s d'irradiation.

Les exemples 17 à 19 correspondent au procédé selon la présente invention mis en oeuvre respectivement avec les monomères B1, B2 et B3 obtenus selon les exemples 1 à 3, comme diluant réactif.

Les exemples 20 à 26 sont des exemples comparatifs, mis en oeuvre selon des procédés connus, permettant de mettre en évidence les avantages du procédé selon notre invention.

Les diluants réactifs utilisés pour les exemples 20 à 23 sont respectivement les monomères M1, M2, M3 et M4 précités et utilisés pour les exemples 8, 9, 10 et 11 respectivement.

Les diluants réactifs utilisés pour les exemples 24 à 26 sont respectivement l'EDGA, le TPGDA et le 1,6-hexanediol diacrylate (HDDA).

Les revêtements adhèrent au support et sont secs au toucher lorsque le taux de conversion atteint 60 à 80%, soit environ 10 fois plus rapidement selon la présente invention que selon les procédés connus.

La figure 3 regroupe les courbes obtenues pour chaque exemple représentant le taux de conversion des fonctions acryliques présentes au départ en fonction du temps d'irradiation, chaque diluant réactif utilisé étant repéré par son code précité.

Le tableau 3 suivant précise, pour chaque exemple, la concentration initiale ($[A]_0$) en fonctions acryliques, la vitesse de photopolymérisation (Rp), la photosensibilité (S), le taux d'insaturations résiduelles ($[A]_{résid.}$) après 1s d'irradiation, ainsi que la dureté Persoz du revêtement obtenu après 0,2s et 1s d'irradiation.

| Ex N° | Diluant réactif | [A]o (eq.kg$^{-1}$) | Rp (eq.kg$^{-1}$.s$^{-1}$) | S (mJ.cm$^{-2}$) | [A]résid (%) | Dureté Persoz (s) après 0,2 s | Dureté Persoz (s) après 1 s |
|---|---|---|---|---|---|---|---|
| 17 | B1 | 2,61 | 113 | 1,5 | 5 | 90 | 140 |
| 18 | B2 | 2,51 | 120 | 1,5 | 4 | / | / |
| 19 | B3 | 2,35 | 90 | 1,9 | 6 | 20 | 30 |
| 20 | M1 | 2,73 | 30 | 8 | 5 | / | / |
| 21 | M2 | 3,55 | 29 | 10 | 4 | 260 | 290 |
| 22 | M3 | 3,32 | 20 | 15 | 6 | / | / |
| 23 | M4 | 3,00 | 17 | 50 | 9 | 20 | 30 |
| 24 | EDGA | 3,31 | 7 | 30 | 3 | 30 | 35 |
| 25 | TPGDA | 3,95 | 57 | 4,4 | 10 | 120 | 190 |
| 26 | HDDA | 4,99 | 30 | 11 | 11 | 120 | 210 |

Tableau 3

Ces résultats mettent en évidence la réactivité et la photosensibilité exceptionnelles et surprenantes des compositions selon notre invention. Un taux de 80% de conversion est atteint après 0,02s d'irradiation alors que ce taux est inférieur à 10% avec les diluants réactifs jusqu'alors utilisés.

La réactivité et la photosensibilité des compositions selon notre invention utilisant un diluant réactif monoacrylique sont même très nettement supérieures à celles des compositions connues utilisant un diluant réactif diacrylique comme le TPGDA ou l'HDDA, ce qui est très intéressant pour les raisons que nous avons déjà mentionnées.

Ces exemples confirment également que tous les éléments de la structure des carbonates (B) de formule générale (I) selon l'invention sont nécessaires et contribuent à un effet de synergie.

On peut noter que ces résultats intéressants ne sont pas obtenus au détriment de la dureté du revêtement obtenu et que la teneur en insaturations résiduelle est faible.

Exemples 27 à 31 Réalisation de revêtements par photoréticulation de compositions (C) obtenues par mélange d'un composé époxy-acrylique avec un carbonate (B) de formule générale (I) utilisé comme diluant réactif en présence d'un photo-amorceur. Comparaison avec des revêtements obtenus dans les mêmes conditions avec des diluants réactifs connus.

Le photo-amorceur utilisé pour tous ces exemples, y compris les exemples comparatifs, est le même que celui utilisé pour les exemples 5 à 26 (IRGACURE 651).

Le composé époxy-acrylique utilisé dans tous ces exemples est la résine époxy-diacrylique commercialisée par la SNPE sous la marque déposée "ACTILANE 72", obtenue par réaction de l'acide acrylique sur le DGEBA.

On réalise les diverses compositions par mélange de 50 parties en poids de la résine époxy-diacrylique, 50 parties en poids de diluant réactif et 5 parties en poids de photo-amorceur.

On opère ensuite comme pour les exemples 5 à 26 pour appliquer les compositions sur le support, radioréticuler les compositions ainsi appliquées, étudier la cinétique de photopolymérisation et mesurer la dureté Persoz des revêtements obtenus, sauf en ce qui concerne la source UV qui est pour ces exemples 27 à 31, une lampe à vapeur de mercure moyenne pression d'une puissance de 2 000 W. Les échantillons sont exposés à une irradiance de 52,5 $10^{-2}$ $W.cm^{-2}$.

Les exemples 27 à 29 correspondent au procédé selon la présente invention, mis en oeuvre respectivement avec les monomères B1, B2 et B3 obtenus selon les exemples 1 à 3, comme diluant réactif.

Les exemples 30 et 31 sont des exemples comparatifs, mis en oeuvre avec des diluants réactifs connus, respectivement le TPGDA et l'EGDA.

Les revêtements selon l'invention adhèrent au support et sont secs au toucher après 15ms environ d'irradiation, soit plus rapidement que selon les procédés connus.

La figure 4 regroupe les courbes obtenues pour chaque exemple représentant le taux de conversion des fonctions acryliques présentes au départ en fonction du temps d'irradiation, chaque diluant réactif utilisé étant repéré par son code précité.

Le tableau 4 suivant précise, pour chaque exemple, la concentration initiale ($[A]_0$) en fonctions acryliques, la vitesse de photopolymérisation (Rp), le taux d'insaturations résiduelles ($[A]_{résid}$) après 1 s d'irradiation, ainsi que la dureté Persoz du revêtement obtenu après 0,2s et 1s d'irradiation.

| Ex N° | Diluant réactif | $[A]_0$ ($eq.kg^{-1}$) | Rp ($eq.kg^{-1}.s^{-1}$) | $[A]_{résid}$ (%) | Dureté Persoz (s) | |
|---|---|---|---|---|---|---|
| | | | | | après 0,2 s | après 1 s |
| 27 | B1 | 3,9 | 500 | 19 | 310 | 340 |
| 28 | B2 | 3,7 | 300 | 20 | / | / |
| 29 | B3 | 3,6 | 200 | 35 | / | / |
| 30 | TPGDA | 5,3 | 120 | 17 | 250 | 310 |
| 31 | EGDA | 4,6 | 35 | 15 | 50 | 75 |

Tableau 4

Ces résultats mettent également en évidence la réactivité supérieure des compositions selon la présente invention. Après 5ms d'exposition, les compositions selon l'invention présentent un taux de conversion compris entre 30 et 50%, alors que ce taux n'est que de 2% avec l'EDGA comme diluant réactif et de 8% avec le TPGDA comme diluant réactif qui est pourtant un composé diacrylique alors que les composés B1, B2 et B3 selon l'invention sont monoacryliques.

On peut noter que ces résultats intéressants ne sont pas obtenus au détriment de la dureté du revêtement obtenu, qui est très élevée, proche de celle du verre.

Des essais complémentaires de flexibilité au mandrin et de pliage en 4 montrent que ces films très durs gardent toutefois une grande souplesse.

Exemples 32 à 35 Réalisation de revêtements par photoréticulation de compositions (C) selon l'invention en l'absence de photo-amorceur

On opère dans les conditions générales décrites pour les exemples 27 à 31, mais les compositions radioréticulables (C) ne contiennent pas de photo-amorceur.

Pour les exemples 32 et 33, la composition radioréticulable (C) est uniquement constituée du monomère carbonate B1 précité, obtenu à l'exemple 1.

Pour les exemples 34 et 35, la composition radioréticulable (C) est obtenue par mélange de 50 parties en poids du polyuréthanne diacrylique "ACTILANE 20" et de 50 parties en poids du monomère carbonate B1 comme diluant réactif.

Pour les exemples 32 et 34, l'irradiation a été mise en oeuvre en atmosphère inerte d'azote, alors que pour les exemples 33 et 35 l'irradiation a été mise en oeuvre sous air, comme pour les exemples 5 à 31.

La figure 5 regroupe les courbes obtenues, en traits continus pour les exemples 32 et 33 et en traits pointillés pour les exemples 34 et 35, représentant le taux de conversion des fonctions acryliques présentes au départ en fonction du temps d'irradiation.

Pour tous ces exemples, après 1s d'irradiation, on obtient des revêtements adhérant au support, secs au toucher, présentant une dureté convenable.

A l'air, après 2s d'irradiation, le taux de conversion atteint 40% et le taux d'insoluble est de 65%, ce qui confirme la réticulation.

Lorsque l'irradiation est effectuée en atmosphère inerte, la vitesse de polymérisation est plus rapide qu'à l'air puisqu'on atteint un taux de conversion supérieur à 50% après seulement 0,25s d'irradiation.

Les avantages très importants découlant de cette mise en oeuvre sans photo-amorceur ont déjà été exposés.

Des essais comparatifs mis en oeuvre dans les mêmes conditions que celle des exemples 32 à 35, mais en remplaçant le monomère B1 par un des monomères précités M1, M2, M3, M4, M5, EDGA, TPGDA, HDDA, montrent qu'on n'obtient pas, avec ces monomères, seuls ou en présence d'ACTILANE 20, de revêtement et que le taux de conversion et le taux d'insoluble sont quasiment nuls.

Exemples 36 et 37 Flexibilité et dureté de revêtements selon l'invention

Ces 2 exemples ont été réalisés dans les mêmes conditions générales que celles de l'exemple 17, l'épaisseur du film étant de 30μm au lieu de 24μm.

Pour l'exemple 36, la composition radioréticulable (C) est obtenue par mélange de 50 parties en poids d'ACTILANE 20, 50 parties en poids du monomère carbonate B1 et 5% en poids d'IRGACURE 651.

Pour l'exemple 37, la composition radioréticulable (C) est obtenue par mélange de 50 parties en poids d'ACTILANE 20, 25 parties en poids du monomère carbonate B1, 25% en poids d'HDDA et 5% en poids d'IRGACURE 651.

Le test de pliage consiste à plier en 4 le film obtenu, à appliquer une pression manuelle puis à constater s'il y a, ou non, rupture.

Ce test, appliqué aux revêtements obtenus pour les exemples 36 et 37, montre qu'il n'y a pas rupture.

La dureté Persoz du revêtement obtenu à l'exemple 36 est de 90s après 0,2s d'irradiation et de 160s après 2s d'irradiation.

Celle du revêtement obtenu à l'exemple 37 est de 220s après 0,2s d'irradiation et de 310s après 2s d'irradiation.

Les revêtements obtenus sont donc à la fois très durs et flexibles, ce qui est particulièrement intéressant.

Exemples 38 à 40 Vieillissement des revêtements selon l'invention. Comparaison avec des revêtements connus

Les revêtements radioréticulés étant souvent utilisés pour des usages en extérieur, on a étudié leur résistance au vieillissement atmosphérique.

Pour ce faire, on a mesuré l'indice de jaunissement de revêtements subissant un vieillissement accéléré dans une enceinte type QUV Panel maintenue à 40°C et équipée de tubes UV dont l'émission se situe entre 280 et 350nm. Les revêtements sont ainsi exposés à une irradiance de 1,5 $mW.cm^{-2}$. Un suivi de la coloration par spectrophotométrie UV-visible permet la détermination de l'indice de jaunissement.

L'exemple 38 est réalisé avec un revêtement selon l'invention, à savoir le revêtement obtenu à l'exemple 17 avec le monomère carbonate B1 comme diluant réactif.

Les exemples 39 et 40 sont des exemples comparatifs réalisés avec des revêtements connus.

L'exemple 39 est réalisé avec le revêtement obtenu à l'exemple 20 avec le diluant réactif M1 et l'exemple 40 avec le revêtement obtenu à l'exemple 21 avec le diluant réactif M2.

La figure 6 regroupe les courbes obtenues représentant, pour ces exemples, l'indice de jaunissement en fonction du temps d'exposition dans l'enceinte, chaque diluant réactif utilisé pour la réalisation des revêtements étant repéré par son code précité.

L'indice de jaunissement du revêtement selon l'invention, après 1 500 heures d'exposition, reste très faible, à un niveau comparable à celui atteint par les revêtements connus résistant le mieux.

## Revendications

1. Procédé de fabrication de revêtements par radioréticulation caractérisé en ce qu'on procède selon les étapes successives suivantes :

   **a)** On réalise une composition radioréticulable (C) par mélange d'au moins un composé (méth)acrylique (A) avec un système diluant réactif comprenant au moins un carbonate mono(méth)acrylique (B) répondant à la formule générale (I) :

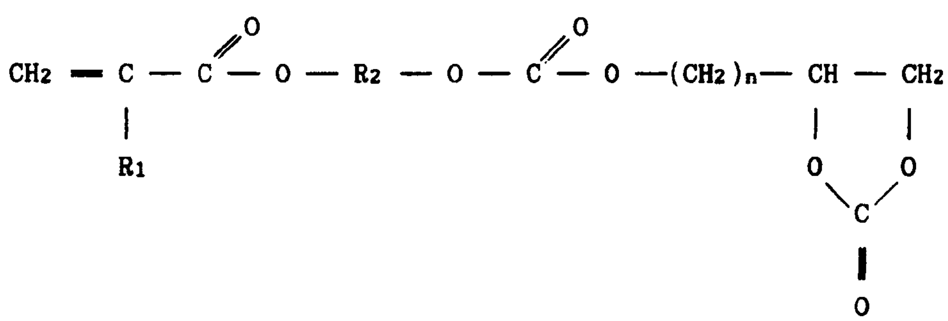

   dans laquelle :

   - $R_1$ représente l'hydrogène ou le groupement méthyle,
   - $R_2$ représente une chaîne alkylène éther ou alkylène, éventuellement substituée par au moins un groupement méthyle ou éthyle, ayant un nombre total d'atomes de carbone compris entre 2 et 6, de préférence une chaîne alkylène de formule $(CH_2)_m$, m étant un nombre entier tel que $2 \leqq m \leqq 6$,
   - **n** représente un nombre entier tel que $1 \leqq n \leqq 6$,

   **b)** On applique la composition radioréticulable (C) sur un support.

   **c)** On radioréticule la composition (C) ainsi appliquée.

2. Procédé selon la revendication 1 caractérisé en ce que le composé (méth)acrylique(A) est un oligomère liquide poly(méth)acrylique à terminaisons (méth)acryliques, dont la masse moléculaire moyenne en nombre est comprise entre 500 et 5 000, de préférence choisi dans le groupe constitué par les oligomères polyester-(méth)acryliques, les oligomères époxy-(méth)acryliques, les oligomères polycarbonate-(méth)acryliques, les oligomères polyéthers-(méth)acryliques et les oligomères polyuréthannes-(méth)acryliques.

3. Procédé selon la revendication 2 caractérisé en ce que les oligomères polyuréthannes-(méth)acryliques sont des oligomères polyuréthannes linéaires di(méth)acryliques.

4. Procédé selon l'une quelconque des revendications précédentes caractérisé en ce que le composé (méth)acrylique (A) représente 25 à 60% en poids de la composition (C) et en ce que le système diluant réactif représente 75 à 40% en poids de la composition (C).

5. Procédé selon la revendication 1 caractérisé en ce que le composé (méth)acrylique (A) est identique au carbonate mono(méth)acrylique (B).

6. Procédé selon la revendication 5 caractérisé en ce que la composition radioréticulable (C) est uniquement constituée du dit composé carbonate mono(méth)acrylique (B).

7. Procédé selon l'une quelconque des revendications précédentes caractérisé en ce que $R_2$ représente $(CH_2)_2$ et n est égal à 1,2 ou 4.

8. Procédé selon l'une quelconque des revendications précédentes caractérisé en ce qu'on radioréticule par rayonnement UV la composition (C) appliquée sur le support, en présence ou en l'absence d'un photoamorceur.

9. Composition radioréticulable (C) telle que définie selon l'une quelconque des revendications précédentes dans laquelle le composé (A) et le carbonate (B) ne sont pas simultanément le méthacryloyloxy-2 éthyl carbonate de carbonyldioxy-2,3 propyle.

10. Carbonate (B) répondant à la formule générale (I) selon la revendication 1 dans laquelle $R_2$ représente $(CH_2)_m$ et dans laquelle m et **n** sont des entiers, identiques ou différents, tels que :
$2 \leqq m \leqq 6$
$1 \leqq n \leqq 6$
$n \neq 1$ lorsque $m = 2$ et $R_1$ représente le groupement méthyle.

## Claims

1. Process for the manufacture of coatings by radio-crosslinking, characterised in that the procedure consists of the following successive steps:
a) A radiocrosslinkable composition (C) is produced by mixing at least one (meth)acrylic compound (A) with a reactive diluent system comprising at least one mono(meth)acrylic carbonate (B) corresponding to the general formula (I):

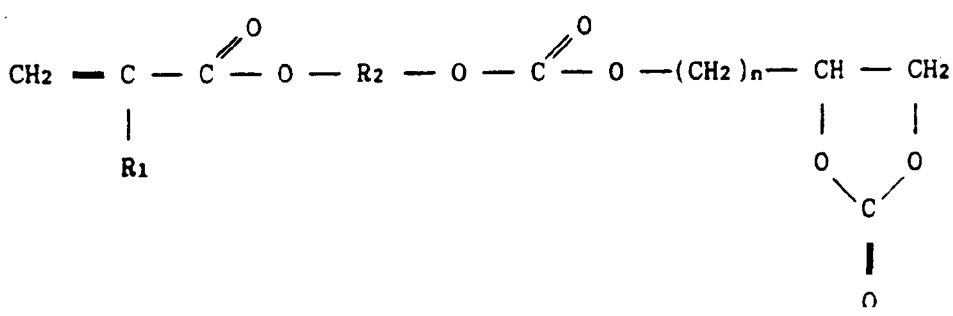

in which:
- $R_1$ denotes hydrogen or the methyl group,
- $R_2$ denotes an alkylene ether or alkylene chain, optionally substituted by at least one methyl or ethyl group, which has a total number of carbon atoms of between 2 and 6, preferably an alkylene chain of formula $(CH_2)_m$, m being an integer such that $2 \leqq m \leqq 6$,
- n denotes an integer such that $1 \leqq n \leqq 6$,

b) The radiocrosslinkable composition (C) is applied onto a support.
c) The composition (C) thus applied is radiocrosslinked.

2. Process according to Claim 1, characterised in that the (meth)acrylic compound (A) is a liquid poly(meth)acrylic oligomer with (meth)acrylic ends, whose number-average molecular mass is between 500 and 5000, preferably chosen from the group consisting of the polyester-(meth)acrylic oligomers, epoxy-(meth)acrylic oligomers, polycarbonate-(meth)acrylic oligomers, polyether-(meth) acrylic oligomers and polyurethane-(meth)acrylic oligomers.

3. Process according to Claim 2, characterised in that the polyurethane-(meth)acrylic oligomers are di-(meth)acrylic linear polyurethane oligomers.

4. Process according to any one of the preceding claims, characterised in that the (meth)acrylic compound (A) represents 25 to 60 % by weight of the composition (C) and in that the reactive diluent system represents 75 to 40 % by weight of the composition (C).

5. Process according to Claim 1, characterised in that the (meth)acrylic compound (A) is identical with mono(meth)acrylic carbonate (B).

6. Process according to Claim 5, characterised in that the radiocrosslinkable composition (C) consists only of the said mono(meth)acrylic carbonate compound (B).

7. Process according to any one of the preceding claims, characterised in that $R_2$ denotes $(CH_2)_2$ and n is equal to 1, 2 or 4.

8. Process according to any one of the preceding claims, characterised in that the composition (C) applied onto the support is radiocrosslinked by UV radiation in the presence or in the absence of a photoinitiator.

9. Radiocrosslinkable composition (C) as defined in any one of the preceding claims, in which the compound (A) and the carbonate (B) are not simultaneously 2,3-carbonyldioxypropyl 2-methacryloyloxyethyl carbonate.

10. Carbonate (B) corresponding to the general formula (I) according to Claim 1, in which $R_2$ denotes $(CH_2)_m$ and in which m and n are identical or different integers such that:

$2 \leqq m \leqq 6$

$1 \leqq n \leqq 6$

$n \neq 1$ when $m = 2$ and $R_1$ denotes the methyl group.

## Patentansprüche

1. Verfahren zur Herstellung von Überzügen durch Strahlungsvernetzung, dadurch gekennzeichnet, daß man die folgenden Stufen nacheinander durchführt:

a) eine strahlungsvernetzbare Zusammensetzung (C) wird bereitgestellt durch Mischen von mindestens einer (Meth)acrylverbindung (A) mit einem reaktiven Verdünnungssystem, das mindestens Mono(meth)acryl-carbonat (B) der allgemeinen Formel (I)

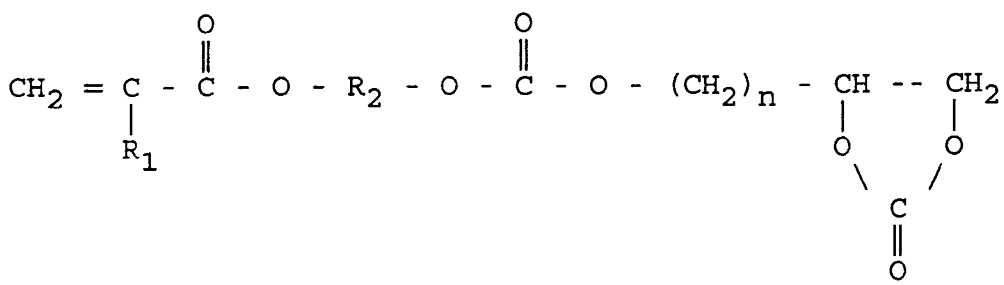

enthält, in der:

- $R_1$ ein Wasserstoffatom oder eine Methylgruppe bedeutet,
- $R_2$ eine Alkylenether- oder Alkylenkette bedeutet, die gegebenenfalls durch eine Methyl- oder Ethylgruppe substituiert ist, wobei die Gesamtzahl der Kohlenstoffatome 2 bis 6 beträgt, und vorzugsweise eine Alkylenkette der Formel $(CH_2)_m$, wobei m eine ganze Zahl entsprechend der Be-

ziehung $2 \leqq m \leqq 6$ darstellt, bedeutet, und
- n eine ganze Zahl entsprechend der Beziehung $1 \leqq n \leqq 6$ darstellt,

b) die strahlungsvernetzbare Zusammensetzung (C) wird auf einen Träger aufgebracht und
c) die auf diese Weise aufgebrachte Zusammensetzung (C) wird einer Strahlungsvernetzung unterzogen.

2. Verfahren nach Anspruch 1, dadurch gekennzeichnet, daß es sich bei der (Meth)acrylverbindung (A) um ein flüssiges Poly(meth)acryl-Oligomeres mit endständigen (Meth)acrylgruppen handelt, dessen Zahlenmittel der Molmasse 500 bis 5000 beträgt und das vorzugsweise aus der Gruppe Polyester-(meth)acryl-Oligomere, Epoxy(meth)acryl-Oligomere, Polycarbonat-(meth)acryl-Oligomere, Polyether-(meth)acryl-Oligomere und Polyurethan-(meth)acryl-Oligomere ausgewählt ist.

3. Verfahren nach Anspruch 2, dadurch gekennzeichnet, daß es sich bei den Polyurethan-(meth)acryl-Oligomeren um lineare Polyurethan-di(meth)acryl-Oligomere handelt.

4. Verfahren nach einem der vorstehenden Ansprüche, dadurch gekennzeichnet, daß die (Meth)acrylverbindung (A) 25 - 60 Gew.-% der Zusammensetzung (C) ausmacht und das reaktive Verdünnungssystem 75 bis 40 Gew.-% der Zusammensetzung (C) ausmacht.

5. Verfahren nach Anspruch 1, dadurch gekennzeichnet, daß die (Meth)acrylverbindung (A) identisch mit dem Mono(meth)acrylcarbonat (B) ist.

6. Verfahren nach Anspruch 5, dadurch gekennzeichnet, daß die strahlungsvernetzbare Zusammensetzung (C) nur aus der Mono(meth)acryl-carbonat-Verbindung (B) besteht.

7. Verfahren nach einem der vorstehenden Ansprüche, dadurch gekennzeichnet, daß $R_2$ die Bedeutung $(CH_2)_2$ hat und n den Wert 1, 2 oder 4 hat.

8. Verfahren nach einem der vorstehenden Ansprüche, dadurch gekennzeichnet, daß man die Strahlungsvernetzung durch UV-Bestrahlung der auf den Träger aufgebrachten Zusammensetzung (C) in Gegenwart oder Abwesenheit eines Photoinitiators durchführt.

9. Strahlungsvernetzbare Zusammensetzung (C) gemäß der Definition in einem der vorstehenden Ansprüche, bei der die Verbindung (A) und das Carbonat (B) nicht gleichzeitig das (2-Methacryloyloxyethyl)-(carbonyl-2,3-dioxypropyl)-carbonat bedeuten.

10. Carbonat (B) der allgemeinen Formel (I) nach Anspruch 1, wobei $R_2$ die Bedeutung $(CH_2)_m$, hat und m und n ganze Zahlen mit gleichen oder unterschiedlichen Werten entsprechend den folgenden Beziehungen bedeuten:
$2 \leqq m \leqq 6$
$1 \leqq n \leqq 6$,
wobei $n \neq 1$, wenn $m = 2$ und $R_1$ eine Methylgruppe bedeutet.

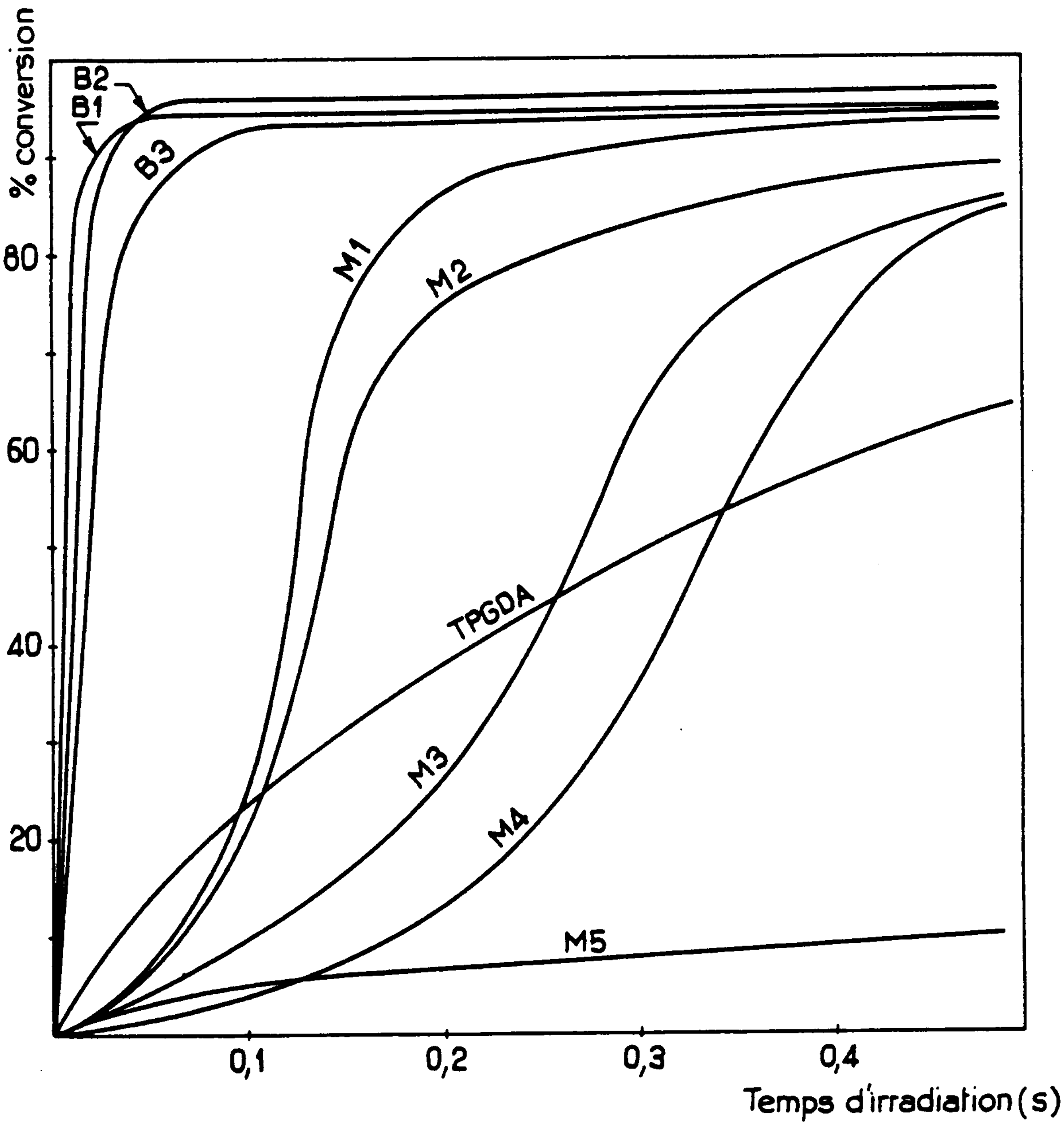
% conversion
80
60
40
20
B2
B1
B3
M1
M2
M3
M4
M5
TPGDA
0,1
0,2
0,3
0,4
Temps d'irradiation (s)

FIG_1

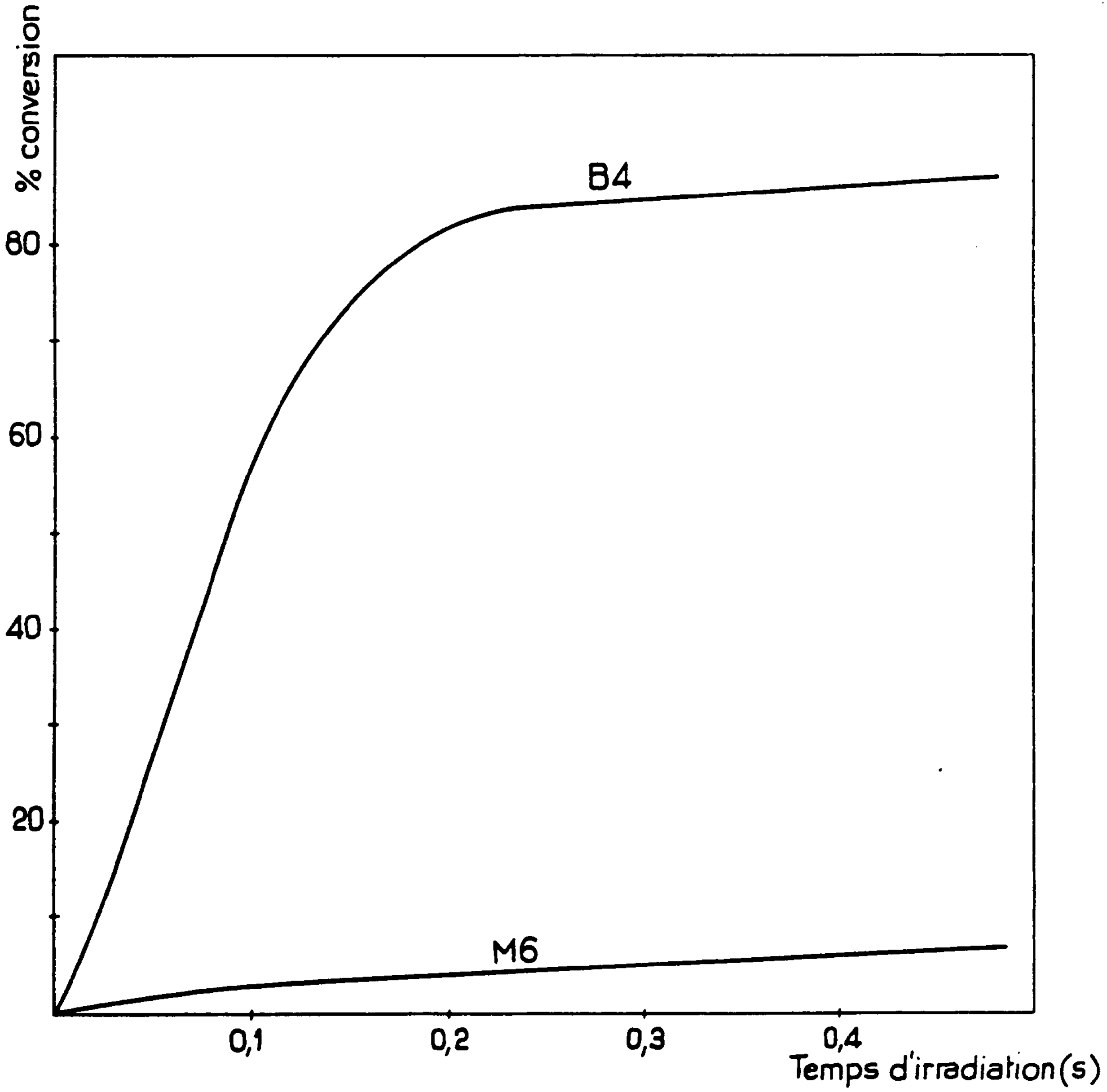


FIG_2

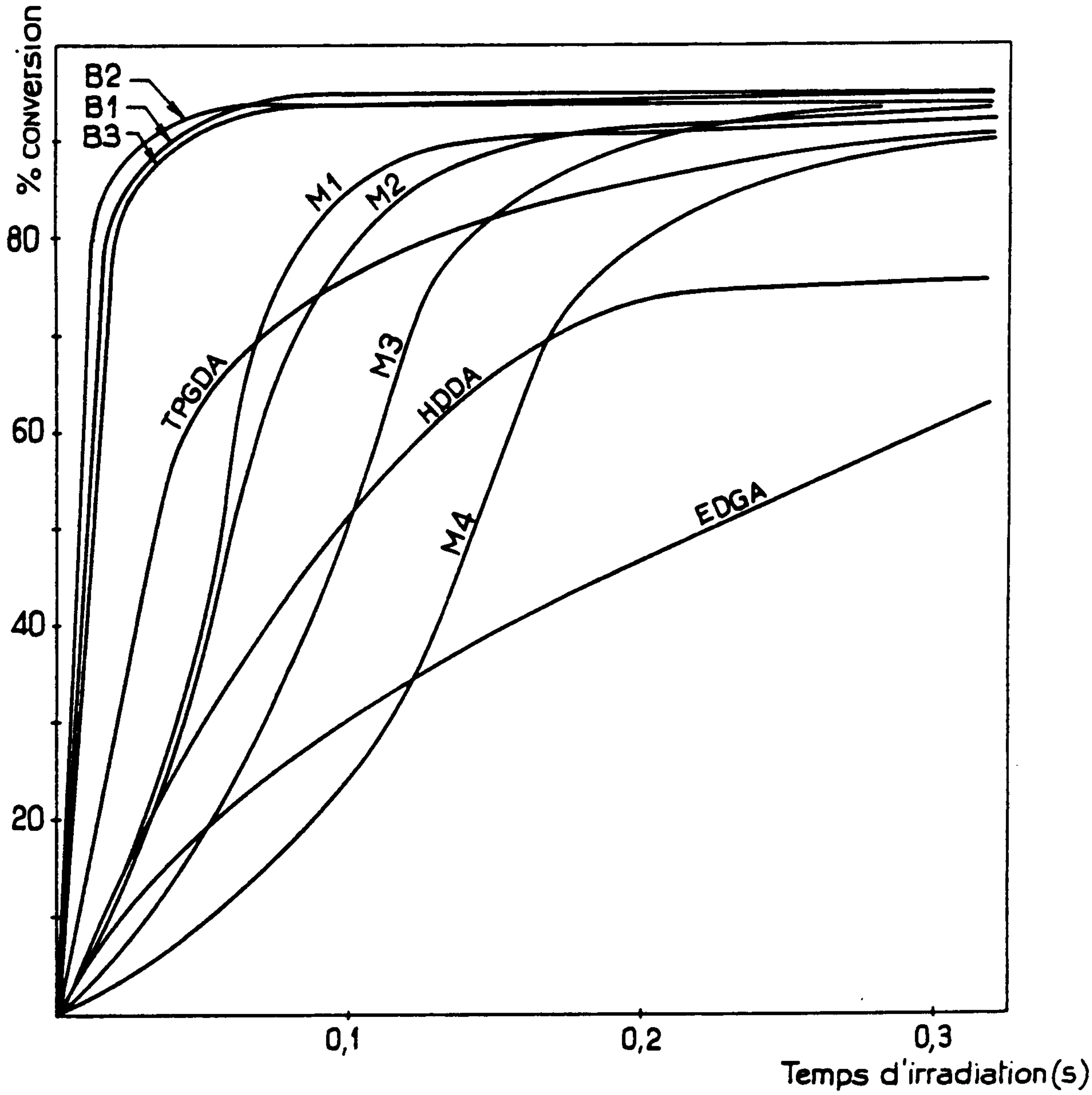
% conversion
80
60
40
20
0,1
0,2
0,3
Temps d'irradiation (s)
B2
B1
B3
M1
M2
M3
M4
TPGDA
HDDA
EDGA

FIG_3

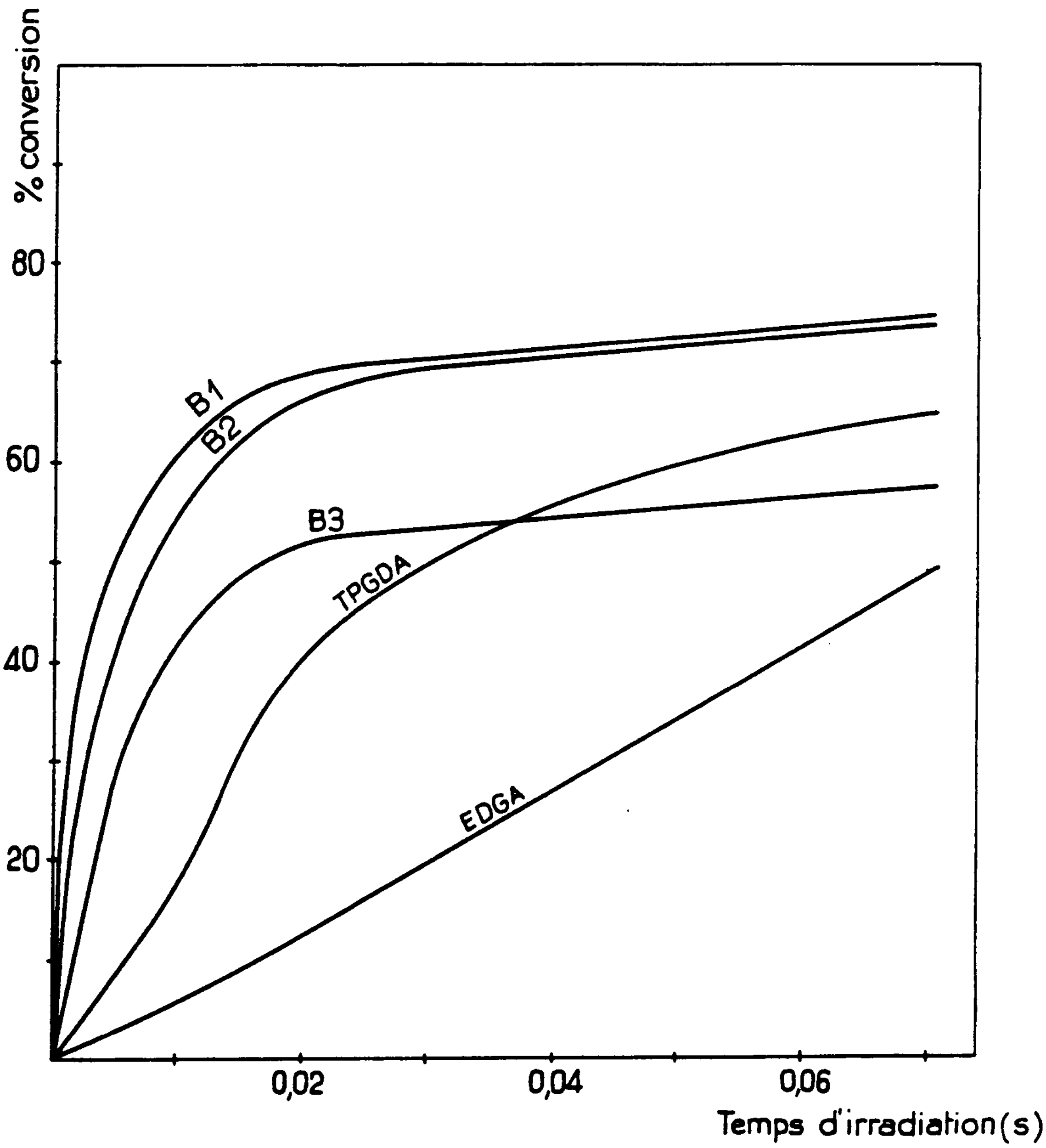
% conversion
80
60
40
20
B1
B2
B3
TPGDA
EDGA
0,02
0,04
0,06
Temps d'irradiation(s)

FIG_4

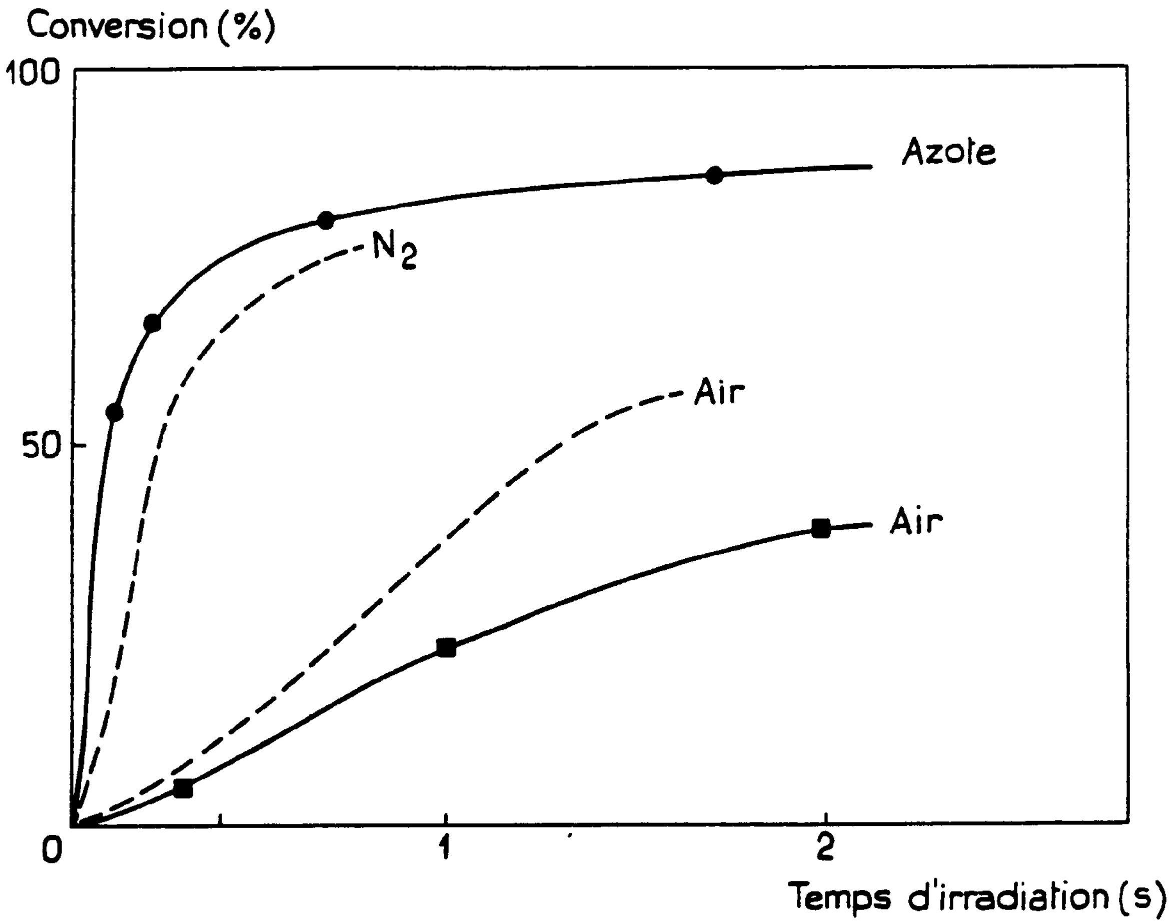
Conversion (%)
100
50
0
1
2
Azote
N2
Air
Air
Temps d'irradiation (s)

FIG_5

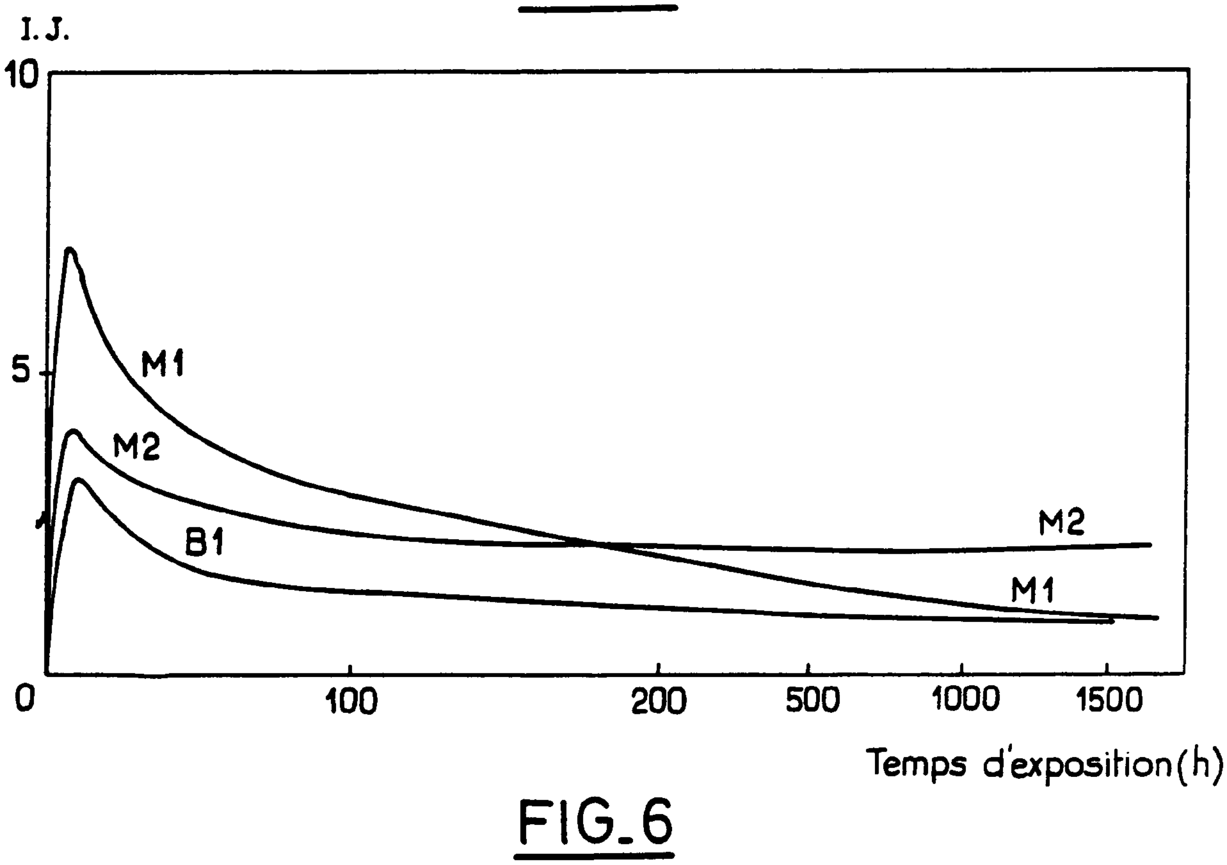
I. J.
10
5
0
100
200
500
1000
1500
M1
M2
B1
M2
M1
Temps d'exposition (h)

FIG_6